# EUROPEAN PATENT SPECIFICATION

(11) **EP 2 840 680 B1**
(45) Date of publication and mention of the grant of the patent: **22.04.2020**
(21) Application number: 14176700.4
(22) Date of filing: 11.07.2014
(51) Int. Cl.: H02K 1/27, H02K 1/14, H02K 29/03

(54) **System and method for reducing torque ripple in an interior permanent magnet motor**
System und Verfahren zur Verminderung der Drehmomentswelligkeit in einem inneren Dauermagnetmotor
Système et procédé de réduction de l'ondulation de couple dans un moteur à aimant permanent intérieur

(30) Priority: 22.07.2013 US 201313947601
(43) Date of publication of application: 25.02.2015
(73) Proprietor: Steering Solutions IP Holding Corporation, Saginaw, MI 48601 (US)
(72) Inventor: Chowdhury, Mazharul H., Midland, MI 48642 (US); Islam, Mohammad S., Saginaw, MI 48603 (US)
(74) Representative: Manitz Finsterwald Patent- und Rechtsanwaltspartnerschaft mbB

(56) References cited:
- WO-A1-2013/065275
- JP-A- H11 341 716
- JP-A- 2010 206 882
- US-A1- 2008 024 031
- US-A1- 2012 139 372
- US-B1- 6 744 171
- US-B2- 8 188 631

## Description

### BACKGROUND OF THE INVENTION

The subject invention relates to system and method for reducing torque ripple in an interior permanent magnet (IPM) motor. The features of the preamble of the independent claim are known from US 8 188 631 B2. Related technologies are known from WO 2013/065275 A1, JP 2010 206882 A, JP H11 341716 A, US 2008/024031 A1, US 2012/139372 A1 and US 6 744 171 B1. US 6 744 171 B1 discloses a permanent magnet motor, where the stator teeth comprise planar surface segments facing the air gap.

Brushless DC (BLDC) motors, such as permanent magnet (PMBLDC or PMSM) motors, provide a number of advantages over brushed motors, including increased torque density, increased reliability and durability, and reduction of electromagnetic interference (EMI). Therefore, BLDC motors are commonly used for high performance industrial applications such as in electrically assisted power steering systems in vehicles. Electrically assisted power steering systems are quickly becoming a desirable alternative to the hydraulically assisted power steering systems. In such systems, an electric motor is connected to the steering rack via a gear mechanism. Sensors may be used to measure various parameters such as hand wheel torque and position, and a control system may use signals from the sensors, along with other vehicle operating parameters to facilitate control over the electric motor drive and to thereby lend desirable steering characteristics to the vehicle.

While use of electrical motors in systems such as electrical power steering assist systems offers many advantages, configuring a BLDC motor to produce an acceptable set of output characteristics is not without challenges. A BLDC motor includes a plurality of permanent magnets fixed to a moving assembly (i.e., a rotor assembly), which rotates within, and relatively to, a fixed armature (i.e., a stator assembly). Outboard of the rotor assembly, the stator assembly hosts the motor windings such that they may be cooled by conduction rather than convection, facilitating the complete enclosure of the motor assembly for improved protection from infiltration of water, dirt, and/or other foreign matter. An Interior Permanent Magnet (IPM) motor comprises a plurality of magnet blocks that are embedded internally within the rotor core to provide for improved magnet retention relative to motors wherein magnets are mounted to the external surfaces of the rotor core.

Unfortunately, as the permanent magnets mounted in or on the rotor interact with the static structure (e.g., the slots) of the stator, various periodically varying phenomena, such as torque ripple, vibrations and speed pulsations, may be experienced. These unfavorable characteristics are generally related to the magnitude, and variations in magnitude, of cogging torque, which is also known as detent or 'no-current' torque. Because cogging torque is caused by interaction between the magnets of the rotor and the static structure, cogging torque varies with changes in rotor position. Cogging torque may be very noticeable at low rotor speeds, causing jerkiness in motor output. Accordingly, it is desirable to reduce cogging torque and increase motor output torque in a BLDC motor.

Various techniques have been used in attempts to reduce torque ripple and increase motor output torque. These include magnet pole shaping, linear skewing of rotor magnets or stator, step-skewing of the magnets, slot/pole combination, magnet shaping, and incorporation of dummy notches in stator teeth. Unfortunately, though, efforts to reduce torque ripple and increase motor output torque in IPM motors have achieved only limited success because IPM motors typically include relatively small air gaps and relatively simple rectangular magnet shapes. As a result, the potential for reducing torque ripple in IPM motors may be limited.

Accordingly, it is desirable to have an improved system and method for reducing torque ripple in IPM motors.

### SUMMARY OF THE INVENTION

In the invention as defined in the independent claim, an interior permanent magnet motor comprises a rotor assembly disposed within a stator assembly. The rotor assembly is configured for rotating about a central axis relatively to the stator assembly. The rotor assembly defines a plurality of magnet pockets within the rotor assembly along a radially outboard surface of the rotor assembly. Each magnet pocket is substantially rectangular in cross-sectional shape, and each magnet pocket is configured to facilitate insertion of a plurality of permanent magnets into and retention of the plurality of permanent magnets within, the magnet pocket. The rotor assembly further comprises a plurality of permanent magnet segments disposed in each magnet pocket. The stator assembly comprises a plurality of winding posts, each having a stator tooth at a radially inward end. Each stator tooth defines an inner surface, which consists of a leading planar stator tooth surface, an intermediate planar stator tooth surface and a trailing planar stator tooth surface. A leading chord length of the leading planar stator tooth surface is substantially equal to a trailing chord length of the trailing planar stator tooth surface. A intermediate chord length of the intermediate planar stator tooth surface is equal to a sum of the leading chord length and the trailing chord length.

The above features and advantages and other features and advantages of the invention are readily apparent from the following detailed description of the invention when taken in connection with the accompanying drawings.

### BRIEF DESCRIPTION OF THE DRAWINGS

The subject matter which is regarded as the invention is particularly pointed out and distinctly claimed in the claims at the conclusion of the specification. The foregoing and advantages and details appear, by way of example only, in the following detailed description of embodiments taken in conjunction with the accompanying drawings in which:
FIG. 1 (not part of the invention) is a drawing showing a cross section of an exemplary embodiment of an IPM motor;
FIG. 2 (not part of the invention) is a drawing showing a cross section of a portion of an exemplary embodiment of an IPM motor;
FIG. 3 is a drawing showing a cross section of a portion of an embodiment of an IPM motor according to the invention; and
FIG. 4 illustrates an example not being part of the invention for reducing torque ripple in an interior permanent magnet motor.

### DETAILED DESCRIPTION

The following description is merely exemplary in nature and is in no way intended to limit the disclosure, its application, or uses. For purposes of clarity, the same reference numbers will be used in the drawings to identify similar elements. As used herein, the phrase at least one of A, B, and C should be construed to mean a logical (A or B or C), using a non-exclusive logical or. It should be understood that steps within a method may be executed in different order without altering the principles of the present disclosure.

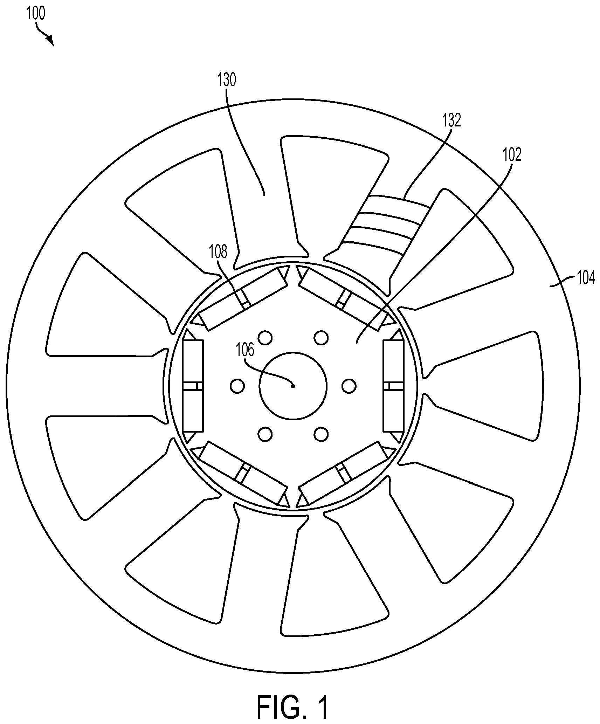

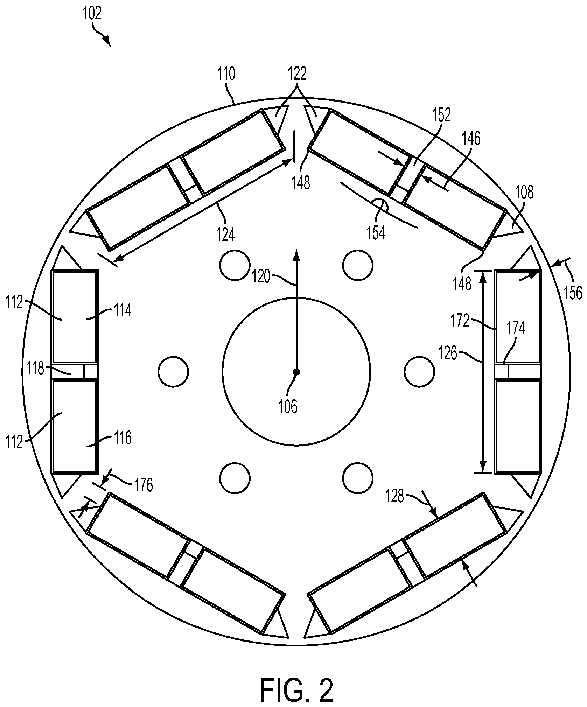

Referring now to the Figures, in which the invention will be described with reference to specific embodiments, without limiting same, FIG. 1 (not part of the invention) shows a cross section of an exemplary embodiment of an IPM motor 100 comprising a rotor assembly 102 that is disposed for rotation within, and relatively to, a stator assembly 104. FIG. 2 (not part of the invention) shows a cross section of an exemplary rotor assembly 102. As shown in FIG. 1 and FIG. 2, the rotor assembly 102 is configured to rotate about a central axis 106 and defines a plurality of magnet pockets 108 distributed within the rotor assembly 102 along a radially outboard surface 110 of the rotor assembly 102. Disposed in each of the magnet pockets 108 is a group of permanent magnet segments 112. Each group of permanent magnet segments 112 comprises a first magnet segment 114 and a second magnet segment 116, with each group of permanent magnet segments 112 representing a single magnet pole within the rotor assembly 102.

As shown in FIG. 1 and FIG. 2, in an example, a plurality (e.g., six) of magnet pockets 108 are distributed along the radially outboard surface 110 of the rotor assembly 102. Each of the magnet pockets 108 is substantially rectangular in cross-sectional shape having a magnet pocket length 126 along a chord 124 of the rotor assembly 102. Each of the magnet pockets 108 is configured to facilitate insertion of a group of permanent magnet segments 112 into each of the magnet pockets 108 while also providing acceptable retention and reliable positioning of the group of permanent magnet segments 112 within each of the magnet pockets 108. An angular deviation 154 is defined by the relative orientations of adjacent permanent magnet segments 112 within each magnet pocket. In an example, as shown in FIG. 2, an angular deviation 154 between adjacent magnet segments is approximately 180 degrees. Put another way, in accordance with this embodiment, first magnet segment 114 and second magnet segment 116 within each magnet pocket are arranged in parallel to one another.

Each of the magnet pockets 108 has a magnet pocket length 126 along a chord 124 of the rotor assembly 102 that is sized so that each of the magnet pockets 108 occupies approximately 90 percent of the available chord length along the edge of the rotor assembly 102. The remaining ten percent of the chord length provides room for a spacing to be defined between adjacent radially outward magnet pocket corners 122. A magnet width 128 of each of the magnet pockets 108 along the radial direction 120 is approximately half as great as the magnet pocket length 126 of each of the magnet pockets 108.

Radially outward magnet pocket corners 122 of the magnet pockets 108 may be shaped (e.g., creating a triangular air gap in the rotor) such that spacing between adjacent radially outward magnet pocket corners 122 is approximately one eighth of the magnet pocket length 126 or one fourth of the magnet width 128. Additionally, each magnet pocket may be disposed at a pocket inset distance 156 from the radially outboard surface 110 of the rotor assembly 102 such that the pocket inset distance 156 is approximately equal to one sixth of the magnet width 128.

A group of permanent magnet segments 112 is positioned within each of the magnet pockets 108 so as to define an inter-segment air gap 152 having an air gap width 118 between the first magnet segment 114 and a second magnet segment 116. In an exemplary embodiment, the air gap width 118 is oriented substantially along a radial direction 120 of the rotor assembly 102. A magnet gap width 146 of the air gap width 118 is approximately equal to one sixth of the magnet pocket length 126 or one third of the magnet width 128.

The air gap may extend only partially across the radial width of the magnet pockets 108 such that the air gap extends only from a mid-pocket position 174 toward the radially outward edge of the magnet pocket. The mid-pocket position 174 may be positioned away from the radially inward edge 172 of the magnet pocket approximately the same distance as the magnet pocket corner width 176. Radially inward corners 148 of the magnet pockets 108 are imbedded in solid material for approximately a magnet pocket corner width 176 of approximately one third of the magnet segment width, a dimension that is approximately equal to the air gap width 118, or approximately one sixth of magnet pocket length 126. Magnet pocket corner width 176, air gap width 118 dimensions is to guide magnet into pockets.

The stator assembly 104 includes a plurality of winding posts 130, each supporting a wire coil 132. At the radially inward end 134 of each of the winding posts 130 is a stator tooth 138. Each pair of adjacent stator teeth 138 is separated by a slot opening 136. A slot opening width 140 is chosen to be quite small for segmented and chained cores to aid in reducing torque ripple. In combination, the stator teeth 138 define an inner surface 142 of the stator assembly 104 having an inner surface radius 144. In an example (not part of the invention), the inner surface 142 is generally substantially cylindrical in shape (i.e., its inner surface radius 144 is substantially constant) and is oriented substantially symmetrically about the central axis 106. In an example (not part of the invention), the inner surface 142 of the stator assembly 104 is circular in cross-section.

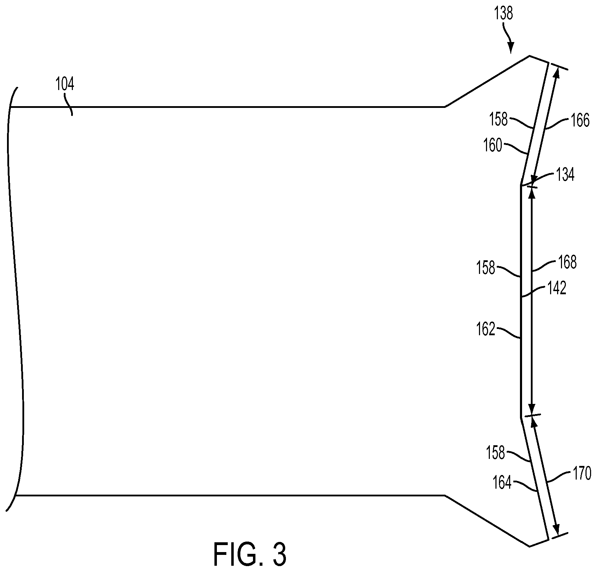

According to the invention, the inner surface 142 of each of the stator teeth 138 defines a plurality of planar stator tooth surfaces 158. In the embodiment, as shown in FIG. 3, the inner surface 142 of each of the stator teeth 138 defines a leading planar stator tooth surface 160, an intermediate planar stator tooth surface 162, and a trailing planar stator tooth surface 164. In the embodiment, a leading chord length 166 of the leading planar stator tooth surface 160 is substantially equal to a trailing chord length 170 of the trailing planar stator tooth surface 164, and an intermediate chord length 168 of the intermediate planar stator tooth surface 162 is equal to a sum of the leading chord length 166 and the trailing chord length 170.

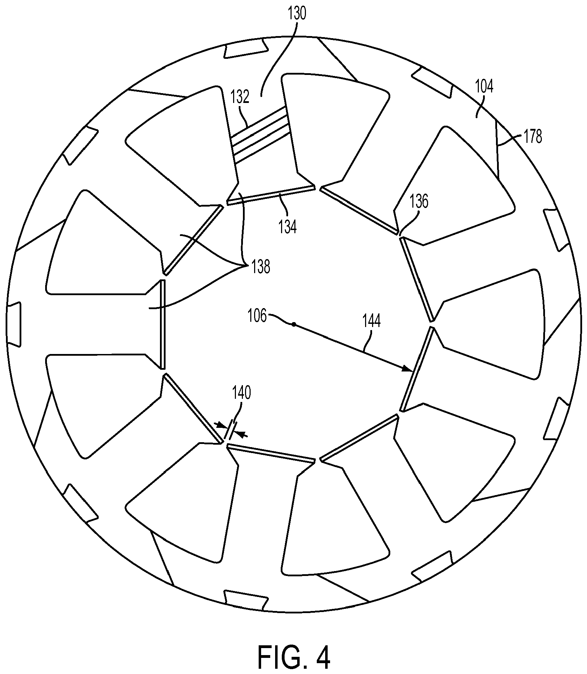

In an example (not part of the invention), as shown in FIG. 4, a stator assembly 104 is segmented such that a stator assembly 104 comprises a plurality (e.g., nine) of stator segments. In such a segmented stator assembly 104, adjacent stator segments meet at a segment interface line 178. It has been discovered that the orientation of the segment interface line 178 can have a substantial impact on both torque ripple and cogging torque. It has also been discovered that reductions in both torque ripple and cogging torque can be realized with a segmented stator assembly 104, particularly where the segment interface line 178 is arranged so as to be angled relatively to a radial direction 120 extending from the center of the stator assembly 104 (i.e., from the axis of rotation of the rotor assembly 102).

Alternatively, the segment interface line 178 may be rotated relatively to the radial direction 120 to mitigate certain ripple components caused by interactions between the rotor assembly 102 and the stator assembly 104. For example, in a configuration wherein the rotor assembly 102 has six poles and the stator assembly 104 has nine slots, the ripple component will be of the 18^{th} order, which will repeat every 20 degrees of rotation (i.e., having a periodicity of approximately 20 degrees). To mitigate the ripple components in such a rotor/stator combination, it may be beneficial to rotate the segment interface line 178, relative to the radial direction 120, by an amount that is between approximately five degrees and 20 degrees, preferably closer to approximately 20 degrees. For other rotor/stator configurations, the amount of angular deviation (i.e., rotation of the segment interface line 178) relative to the radial direction 120 will depend upon the numbers of poles on the rotor assembly 102 and the number of slots on the stator assembly 104. For example, with a rotor assembly 102 having 12 poles, and a stator assembly 104 having 8 slots, the expected ripple component will be of the 24^{th} order, and the configuration would be expected to have a periodicity of approximately 15 degrees. Thus, in accordance with an exemplary embodiment, it may be beneficial, for the purpose of mitigating the ripple components, to rotate the segment interface line 178, relative to the radial direction 120, by an amount that is between approximately five degrees and 15 degrees, preferably closer to approximately 15 degrees.

In accordance with exemplary embodiments of the invention, adjustments to torque ripple and/or output torque may be achieved by adjusting the spacing between adjacent radially outward magnet pocket corners 122, magnet pocket corner width 176, magnet pocket length 126, magnet width 128, slot opening width 140, and shaping of the stator teeth 138. Each of these parameters may be configured so as to reduce torque ripple and increase motor output torque. The exemplary configuration depicted in the drawings provides good electromagnetic torque response with six rectangular bar magnet poles.

In the disclosed configuration, the spacing between adjacent radially outward magnet pocket corners 122, pocket inset distance 156, air gap width 118, magnet pocket corner width 176 have been optimally minimized to reduce the ripple torque and to maximize the motor average torque. The magnet pocket design, including the magnet pocket corner width 176 and the air gap width 118, considers the need to be able to guide magnets into pockets and thus improves the positioning and retention of the magnet in the magnet slot, helping to reduce the ripple associated with the magnet positioning into the pocket. A back-pocket profile may be configured so as to facilitate plastic injection and also has influence on the output torque. The magnet dimensions are chosen so that the combined rotor structures gives lower torque ripple but higher average torque.

The slot opening width 140 can be chosen to produce optimum ripple torque. For a motor comprising a stator with twenty-seven slots and a stator with six poles, the inner arc of the stator teeth 138 is concentric to the rotor outer arc. On the other hand, the inner arc of the stator may be configured as a combination of flat planes for a motor comprising a stator having nine slots and a rotor with six poles. However in both designs the radially inner surface 142 of the stator can be flat, concave or convex shape with respect to the center axis. Both configurations show better output torque response. In an exemplary embodiment, average torque output increases 4.5% increase at rated current while ripple torque decreases 50% at rated current, and magnet volume decreases 12%.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined in the claims.

## Claims

1. An interior permanent magnet motor (100) comprising:
a rotor assembly (102) disposed within a stator assembly (104);
the rotor assembly (102) being configured for rotating about a central axis (106) relatively to the stator assembly (104);
the rotor assembly (102) defining a plurality of magnet pockets (108) within the rotor assembly (102) along a radially outboard surface (110) of the rotor assembly (102),
each magnet pocket (108) being substantially rectangular in cross-sectional shape, and
each magnet pocket (108) being configured to facilitate insertion of a group of permanent magnet segments (112) into and retention of the group of permanent magnet segments (112) within, the magnet pocket (108);
the rotor assembly (102) further comprising a group of permanent magnet segments disposed in each magnet pocket (108),
the stator assembly (104) comprising a plurality of winding posts (130), each having a stator tooth (138) at a radially inward end (134) of each of the plurality of winding posts (130), and each stator tooth (138) defining an inner surface (142),
**characterized in that**
each inner surface (142) consists of a leading planar stator tooth surface (160), an intermediate planar stator tooth surface (162), and a trailing planar stator tooth surface (164), wherein the leading planar stator tooth surface (160) and the trailing planar stator tooth surface (164) are angled toward the central axis (106) with respect to the intermediate planar stator tooth surface (162), and wherein a leading chord length (166) of the leading planar stator tooth surface (160) is substantially equal to a trailing chord length (170) of the trailing planar stator tooth surface (164), and an intermediate chord length (168) of the intermediate planar stator tooth surface (162) is equal to a sum of the leading chord length (166) and the trailing chord length (170).

2. The interior permanent magnet motor of claim 1, wherein the group of permanent magnet segments (112) disposed in each magnet pocket (108) are arranged so as to define an air gap (152) between adjacent magnet segments of the group of permanent magnet segments (112).

3. The interior permanent magnet motor of claim 2, wherein the group of permanent magnet segments (112) disposed in each magnet pocket (108) comprises a first magnet segment (114) and a second magnet segment (116).

4. The interior permanent magnet motor of claim 2,
wherein the group of permanent magnet segments (112) disposed in each magnet pocket (108) forms a single magnet pole.

5. The interior permanent magnet motor of claim 2,
wherein each magnet segment of the group of permanent magnet segments (112) disposed in each magnet pocket (108) is arranged substantially in parallel with each of the other magnet segments of the group of permanent magnet segments (112) disposed in the magnet pocket (108).

6. The interior permanent magnet motor of claim 4, wherein a magnet width (128) of each magnet pocket (108) along a radial direction (120) is approximately half as great as a magnet pocket length (126) of each magnet pocket (108).

7. The interior permanent magnet motor of claim 6,
wherein each magnet pocket (108) has two radially outward magnet pocket corners (122); and
wherein each radially outward magnet pocket corner (122) is shaped such that spacing between adjacent radially outward magnet pocket corners (122) is approximately one eighth of the magnet pocket length (126).

8. The interior permanent magnet motor of claim 6,
wherein each magnet pocket (108) is disposed at a pocket inset distance (156) from the radially outboard surface (110) of the rotor assembly (102); and
wherein the pocket inset distance (156) is approximately equal to one sixth of the magnet width (128).

9. The interior permanent magnet motor of claim 3, wherein, within each magnet pocket (108), the first magnet segment (114) and the second magnet segment (116) are positioned so as to define an inter-segment air gap (152) defining an air gap width (118) between the first magnet segment (114) and the second magnet segment (116).

10. The interior permanent magnet motor of claim 9, wherein the air gap (152) is oriented substantially along a radial direction (120) of the rotor assembly (102).

11. The interior permanent magnet motor of claim 9, wherein the air gap (152) extends only partially across a radial width of the magnet pocket (108) such that the air gap (152) extends only from a mid-pocket position (174) toward a radially outward edge of the magnet pocket (108).

## Patentansprüche

1. Motor (100) mit innenliegenden Permanentmagneten, umfassend:
eine Rotoranordnung (102), die innerhalb einer Statoranordnung (104) angeordnet ist;
wobei die Rotoranordnung (102) zur Drehung um eine Mittelachse (106) relativ zu der Statoranordnung (104) konfiguriert ist;
wobei die Rotoranordnung (102) eine Vielzahl von Magnettaschen (108) in der Rotoranordnung (102) entlang einer radial äußeren Oberfläche (110) der Rotoranordnung (102) definiert,
wobei jede Magnettasche (108) im Querschnitt im Wesentlichen rechteckig ist, und
wobei jede Magnettasche (108) konfiguriert ist, um das Einführen einer Gruppe von Permanentmagnetsegmenten (112) in die Magnettasche (108) und das Festhalten der Gruppe von Permanentmagnetsegmenten (112) darin zu ermöglichen;
wobei die Rotoranordnung (102) ferner eine Gruppe von Permanentmagnetsegmenten umfasst, die in jeder Magnettasche (108) angeordnet sind,
wobei die Statoranordnung (104) eine Vielzahl von Wicklungssäulen (130) umfasst, von denen jede einen Statorzahn (138) an einem radial inneren Ende (134) von jeder der Vielzahl von Wicklungssäulen (130) aufweist und jeder Statorzahn (138) eine innere Oberfläche (142) definiert,
**dadurch gekennzeichnet, dass**
jede innere Oberfläche (142) aus einer voreilenden planaren Statorzahnoberfläche (160), einer planaren Statorzahn-Zwischenoberfläche (162) und einer nacheilenden planaren Statorzahnoberfläche (164) besteht, wobei die voreilende planare Statorzahnoberfläche (160) und die nacheilende planare Statorzahnoberfläche (164) zu der Mittelachse (106) hin einen Winkel mit Bezug auf die planare Statorzahn-Zwischenoberfläche (162) bilden, und wobei eine voreilende Sehnenlänge (166) der voreilenden planaren Statorzahnoberfläche (160) im Wesentlichen gleich einer nacheilenden Sehnenlänge (170) der nacheilenden planaren Statorzahnoberfläche (164) ist und eine Zwischensehnenlänge (168) der planaren Statorzahn-Zwischenoberfläche (162) gleich einer Summe der voreilenden Sehnenlänge (166) und der nacheilenden Sehnenlänge (170) ist.

2. Motor mit innenliegenden Permanentmagneten nach Anspruch 1, wobei die Gruppe von Permanentmagnetsegmenten (112), die in jeder Magnettasche (108) angeordnet ist, so eingerichtet ist, dass sie einen Luftspalt (152) zwischen benachbarten Magnetsegmenten der Gruppe von Permanentmagnetsegmenten (112) definiert.

3. Motor mit innenliegenden Permanentmagneten nach Anspruch 2, wobei die Gruppe von Permanentmagnetsegmenten (112), die in jeder Magnettasche (108) angeordnet ist, ein erstes Magnetsegment (114) und ein zweites Magnetsegment (116) umfasst.

4. Motor mit innenliegenden Permanentmagneten nach Anspruch 2, wobei die Gruppe von Permanentmagnetsegmenten (112), die in jeder Magnettasche (108) angeordnet ist, einen einzigen Magnetpol bildet.

5. Motor mit innenliegenden Permanentmagneten nach Anspruch 2, wobei jedes Magnetsegment der Gruppe von Permanentmagnetsegmenten (112), die in jeder Magnettasche (108) angeordnet ist, im Wesentlichen parallel zu jedem der anderen Magnetsegmente der Gruppe von Permanentmagnetsegmenten (112), die in der Magnettasche (108) angeordnet sind, eingerichtet ist.

6. Motor mit innenliegenden Permanentmagneten nach Anspruch 4, wobei eine Magnetbreite (128) jeder Magnettasche (108) entlang einer radialen Richtung (120) in etwa halb so groß wie eine Magnettaschenlänge (126) jeder Magnettasche (108) ist.

7. Motor mit innenliegenden Permanentmagneten nach Anspruch 6,
wobei jede Magnettasche (108) zwei radial äußere Magnettaschenecken (122) aufweist; und
wobei jede radial äußere Magnettaschenecke (122) so geformt ist, dass ein Abstand zwischen benachbarten radial äußeren Magnettaschenecken (122) in etwa ein Achtel der Magnettaschenlänge (126) ist.

8. Motor mit innenliegenden Permanentmagneten nach Anspruch 6,
wobei jede Magnettasche (108) an einer Tascheneinfügedistanz (156) von der radial äußeren Oberfläche (110) der Rotoranordnung (102) aus angeordnet ist; und
wobei die Tascheneinfügedistanz (156) in etwa gleich einem Sechstel der Magnetbreite (128) ist.

9. Motor mit innenliegenden Permanentmagneten nach Anspruch 3, wobei innerhalb jeder Magnettasche (108) das erste Magnetsegment (114) und das zweite Magnetsegment (116) so positioniert sind, dass sie einen Zwischensegment-Luftspalt (152) definieren, der eine Luftspaltbreite (118) zwischen dem ersten Magnetsegment (114) und dem zweiten Magnetsegment (116) definiert.

10. Motor mit innenliegenden Permanentmagneten nach Anspruch 9, wobei der Luftspalt (152) im Wesentlichen entlang einer radialen Richtung (120) der Rotoranordnung (102) orientiert ist.

11. Motor mit innenliegenden Permanentmagneten nach Anspruch 9, wobei sich der Luftspalt (152) nur teilweise über eine radiale Breite der Magnettasche (108) hinweg erstreckt, sodass sich der Luftspalt (152) nur von einer Mittelposition (174) der Tasche aus zu einem radial äußeren Rand der Magnettasche (108) erstreckt.

## Revendications

1. Moteur à aimants permanents intérieurs (100) comprenant :
un assemblage rotor (102) disposé à l'intérieur d'un assemblage stator (104) ;
l'assemblage rotor (102) étant configuré pour effectuer une rotation autour d'un axe central (106) par rapport à l'assemblage stator (104) ;
l'assemblage rotor (102) définissant une pluralité de poches à aimant (108) à l'intérieur de l'assemblage rotor (102) le long d'une surface radialement extérieure (110) de l'assemblage rotor (102),
chaque poche à aimant (108) étant sensiblement rectangulaire en forme de section transversale, et
chaque poche à aimant (108) étant configurée pour faciliter l'insertion d'un groupe de segments d'aimants permanents (112) jusque dans la poche à aimant (108) et pour la rétention du groupe de segments d'aimants permanents (112) à l'intérieur de la poche à aimant permanent (108) ;
l'assemblage rotor (102) comprenant en outre un groupe de segments d'aimants permanents disposés dans chaque poche à aimant (108),
l'assemblage stator (104) comprenant une pluralité de poteaux de bobinage (130), chacun ayant une dent de stator (138) à une extrémité radialement intérieure (134) de chacun de la pluralité de poteaux de bobinage (130), et chaque dent de stator (138) définissant une surface intérieure (142),
**caractérisé en ce que**
chaque surface intérieure (142) est constituée d'une surface de dent de stator plane de tête (160), d'une surface de dent de stator plane intermédiaire (162), et d'une surface de dent de stator plane de queue (164), dans lesquelles la surface de dent de stator plane de tête (160) et la surface de dent de stator plane de queue (164) sont sous un angle en direction de l'axe central (106) par rapport à la surface de dent de stator plane intermédiaire (162), et dans lesquelles une longueur de corde de tête (166) de la surface de dent de stator plane de tête (160) est sensiblement égale à une longueur de corde de queue (170) de la surface de dent de stator plane de queue (164), et une longueur de corde intermédiaire (168) de la surface de dent de stator plane intermédiaire (162) est égale à une somme de la longueur de corde de tête (166) et de la longueur de corde de queue (170).

2. Moteur à aimants permanents intérieurs selon la revendication 1,
dans lequel le groupe de segments d'aimants permanents (112) disposés dans chaque poche à aimant (108) sont agencés de manière à définir une lame d'air (152) entre des segments d'aimants adjacents du groupe de segments d'aimants permanents (112).

3. Moteur à aimants permanents intérieurs selon la revendication 2,
dans lequel le groupe de segments d'aimants permanents (112) disposés dans chaque poche à aimant (108) comprend un premier segment d'aimant (114) et un second segment d'aimant (116).

4. Moteur à aimants permanents intérieurs selon la revendication 2,
dans lequel le groupe de segments d'aimants permanents (112) disposés dans chaque poche à aimant (108) forme un unique pôle magnétique.

5. Moteur à aimants permanents intérieurs selon la revendication 2,
dans lequel chaque segment d'aimants du groupe de segments d'aimants permanents (112) disposés dans chaque poche à aimant (108) est agencé sensiblement en parallèle à chacun des autres segments d'aimants du groupe de segments d'aimants permanents (112) disposés dans la poche à aimant (108).

6. Moteur à aimants permanents intérieurs selon la revendication 4, dans lequel une largeur de poche à aimant (128) de chaque poche à aimant (108) le long d'une direction radiale (120) est approximativement la moitié d'une longueur de poche à aimant (126) de chaque poche à aimant (108).

7. Moteur à aimants permanents intérieurs selon la revendication 6,
dans lequel chaque poche à aimant (108) a deux coins de poche à aimant radialement extérieurs (122) ; et
dans lequel chaque coin de poche à aimant radialement extérieur (122) est conformé de telle façon qu'un espacement entre coins de poche à aimant radialement extérieurs adjacents (128) est approximativement un huitième de la longueur de poche à aimant (126).

8. Moteur à aimants permanents intérieurs selon la revendication 6,
dans lequel chaque poche à aimant (108) est disposée à une distance de retrait (156) depuis la surface radialement extérieure (110) de l'assemblage rotor (102) ; et
dans lequel la distance de retrait (156) des poches est approximativement égale à un sixième de la largeur (128) des aimants.

9. Moteur à aimants permanents intérieurs selon la revendication 3, dans lequel, à l'intérieur de chaque poche à aimant (108), le premier segment d'aimant (114) et le second segment d'aimant (116) sont positionnés de manière à définir une lame d'air entre segments (152) définissant une largeur de lame d'air (118) entre le premier segment d'aimant (114) et le second segment d'aimant (116).

10. Moteur à aimants permanents intérieurs selon la revendication 9, dans lequel la lame d'air (152) est orientée sensiblement le long d'une direction radiale (120) de l'assemblage rotor (102).

11. Moteur à aimants permanents intérieurs selon la revendication 9, dans lequel la lame d'air (152) s'étend uniquement partiellement à travers une largeur radiale de la poche à aimant (108) de telle façon que la lame d'air (152) s'étend uniquement depuis une position à mi-poche (174) en direction d'un bord radialement extérieur de la poche à aimant (108).
